# EUROPEAN PATENT APPLICATION

(11) **EP 2 444 241 A1**
(43) Date of publication of application: **25.04.2012**
(21) Application number: 11250865.0
(22) Date of filing: 21.10.2011
(51) Int. Cl.: B29C 70/44, B29C 70/68, B29C 70/76, B29C 41/20, B29C 41/36, B29K 105/08, B29K 83/00

(54) **Resin film procedures**

(30) Priority: 22.10.2010 GB 1017847
(71) Applicant: Harper, Alan Roger, Saltash Cornwall PL12 4BY (GB)
(72) Inventor: Harper, Alan Roger, Saltash Cornwall PL12 4BY (GB)
(74) Representative: Brown, Michael Stanley

(57) **Abstract**

A method of attaching a resin film to an insert (1), which includes forming the insert (1) with a generally cylindrical portion (6), providing one or more fabric sheets (9, 10), attaching the fabric sheets (9, 10) to the generally cylindrical portion (6) of the insert (1) and then applying a flexible plastics material in such manner as to secure the one or more fabric sheets (9, 10) to the insert (1) and to form a moulded product incorporating the insert.

## Description

### Field of the Invention

This invention relates to resin film procedures.

The composites industry regularly uses an infusion process to mould composite parts. A rigid mould face has placed upon its mouldable surface a pack of fibres. A layer of infusion plastic film is positioned on top of the pack of fibres and sealed around its edges to form a sealed chamber. A vacuum is created inside the mould and thus within the sealed chamber so as to compress the film over the fibre pack. A reactive resin is then strategically introduced into the sealed mould cavity to infuse the fibres and, once the resin has cured, the film is removed so that the moulded composite part can be taken out of the mould. The used film is then discarded.

The infusion process can also be carried out using reusable films rather than the consumable type commonly used at present. The use of reusable flexible films provides significant cost savings as a result of repeated use in terms of labour and greatly reduced waste.

In either case, it is necessary to provide a number of sealed vacuum-tight connections to the film. In the case of reusable films or membranes, it is common to use a curable silicone resin either sprayed or brushed onto the mould shape to form a continuous membrane. Although other curable liquids can be used e.g. polyurethane and latex resins, silicone resins are preferred as they are self-releasing during their usable lives.

The self-releasing properties of silicone films and membranes adds a complication in that, on occasions, it has proven difficult to bond vacuum and resin connection inserts of metal or plastic to the silicone material during manufacture. Some people use fittings which are screwed together with the film or membrane sandwiched between fitting members but these have proven to be restrictively large in diameter and costly.

It is an object of the present invention to provide a simple and effective method of bonding silicone or other resin films or membranes to connection inserts.

When making a reusable silicone membrane bag for the infusion or pre-impregnation of composite mouldings, there is a need to include hard fixing points or fittings within the bag structure. A large re-usable silicone bag that is designed to cover, for example, a 20 m² mould surface might easily weigh in excess of 75 Kg.

Although small bags designed to cover an area of 2 to 3 m² can be handled by the operator with reasonable ease, there is a requirement to provide one or more strategically located lifting points or fittings attached to the rear of a large bag and it is a further object of the present invention to satisfy this requirement.

### Summary of the Invention

According to a first aspect of the present invention there is provided a method of attaching a resin film to an insert, which includes forming the insert with a generally cylindrical portion, providing one or more fabric sheets, and attaching the fabric sheets to the generally cylindrical portion of the insert and then applying a flexible plastics material in such manner as to secure the one or more fabric sheets to the insert and to form a moulded product incorporating the insert.

The fabric sheet or sheets is or are preferably open weave mesh-type synthetic plastic sheets.

The generally cylindrical portion of the insert may be formed with at least two circumferential grooves which receive parts of the fabric sheets.

The generally cylindrical portion of the insert may alternatively be designed to have at least two rings fitted over it, with at least one of the sheets being gripped (i.e. held in position) between two rings attached to the generally cylindrical portion of the insert.

According to a second aspect of the present invention there is provided a resin infusion process that includes the above method.

### Brief Description of the Drawings

Figure 1 is a sectional view of a first form of insert illustrating an initial stage prior to moulding into a membrane,
Figure 2 is a sectional view showing the insert of Figure 1 moulded into the resin infusion membrane,
Figure 3 is a sectional view similar to Figure 2 showing a second form of insert, and
Figure 4 is a sectional view similar to Figure 2 showing a third form of insert.

### Description of the Preferred Embodiments

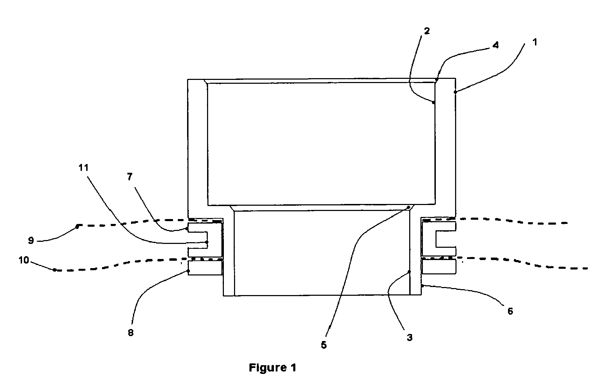

Figure 1 illustrates an insert 1 in cross-section with internal surfaces 2 and 3 with lead-in chamfers 4 and 5. The diameters of the internal surfaces are chosen and machined as required to permit retrospective fitting of vacuum pipe connectors or resin injection valves or pressure sensors when the membrane mould is in production use. The exact design and dimensions of the insert 1 can be varied as required.

The insert 1 has a generally cylindrical nose portion 6, having an external diameter which is as small as the diameter of surface 3 will allow. This is in order to provide the smallest possible fitting footprint once the insert 1 has been installed in the flexible membrane which is formed as described below. This allows it to be placed in the most desired and ideal positions within a flexible membrane mould surface, which could have many variations in shape and detail.

Items 7 and 8 are machined rings of similar material to the host insert 1 and they have internal diameters such that they closely fit over the nose 6. Items 9 and 10 are sheets of synthetic fabric material which are characterised by an open weave mesh type structure and are strong in tension with little to no stretch capability. It is the purpose of these sheets, which effectively form skirts, to provide anchor points for the silicone resin spray or brush material which will be used to manufacture the production membrane. The skirts 9 and 10 are firmly attached to the fitting 1 by means of the rings 7 and 8 and extend radially therefrom. Various methods of attachment can be used. For example, the rings 7 and 8 may be compression fits, or attached by heat welding or adhesive, to ensure effective attachment of the skirts 9 and 10 to the fitting 1, with the skirts 9 and 10 sandwiched by the rings 7 and 8. There is thus a mechanical or chemical bond stronger than the mesh web material itself when in tension.

As can be seen from Figure 1, one of the skirts 10 is gripped (i.e. held in position) between the two rings 7 and 8, whereas the other skirt 9 is gripped (i.e. held in position) between ring 7 and an annular shoulder of the insert 1.

Ring 7 is provided with a machined groove 11 the use of which is described following. The parts are thus positioned as shown in Figure 1 prior to formation of the membrane.

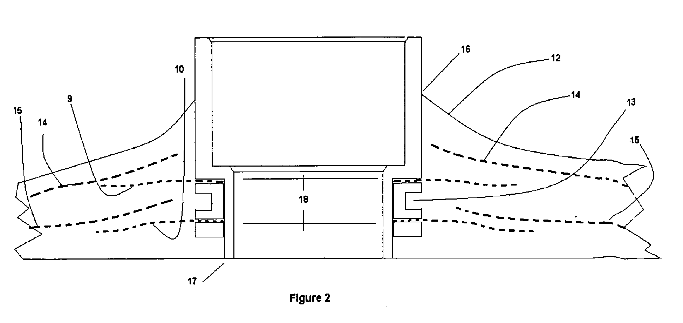

Figure 2 illustrates the same insert 1 as is shown in Figure 1 but in this case it is shown as being moulded into a silicone membrane 12 with a mould face 19.

It will be noted that the skirts 9 and 10 are embedded within the silicone membrane 12 which also has its own web reinforcement layers 14 and 15 intermingled with the skirts 9 and 10. The reinforcement layers 14 and 15 are typically formed of the same material as the skirts 9 and 10 and are placed in position during the spraying or brushing on of the silicone resin.

There exists no chemical bonding of the cured flexible membrane 12 to any part of the insert 1. However, there does now exist a strong but flexible mechanical bonding between the membrane 12 and the insert 1 by way of the fabric skirts 9 and 10. Although the membrane 12 can be pulled away from the insert 1 at the points indicated at 16 and 17, only limited pulling away can be achieved and no such pulling away is achievable at the fabric skirt internal fixing points bounded by the rings 7 and 8. In other words, the peripheral fitting zone marked as 18 clearly anchors the flexible membrane 12 to the insert 1. Further, within the machined groove 11 of the ring 7, the cured membrane material 13 at this point provides additional sealing against vacuum leak between the outside surface of the insert 1 and the inner surface of the membrane 12.

It will be appreciated that the insert 1 can be provided with more than two rings 6, 7, with correspondingly more skirts 9, 10 for greater insert-to-membrane attachment strength. In addition, more than one ring may be formed with a recess or groove 11 to afford more sealing capability.

The design shown in Figures 1 and 2 of the drawings has been proven to be adequate in both mechanical bonding and vacuum sealing efficiency when employed with silicone resin membranes, the most demanding and the most difficult flexible membrane material to attach to an insert.

The inventive merit of this application is focussed on providing a low cost and simple moulded-in hard hole fitting in a flexible membrane material without the need to use high cost primers and high tech application methods to achieve the same result through chemical bonding techniques.

It also has the added advantage of providing a fitting with a small footprint which leads to greater flexibility of mould design for the user and the fabric mesh skirts may be thought of as roots as of a tree within a flexible soil.

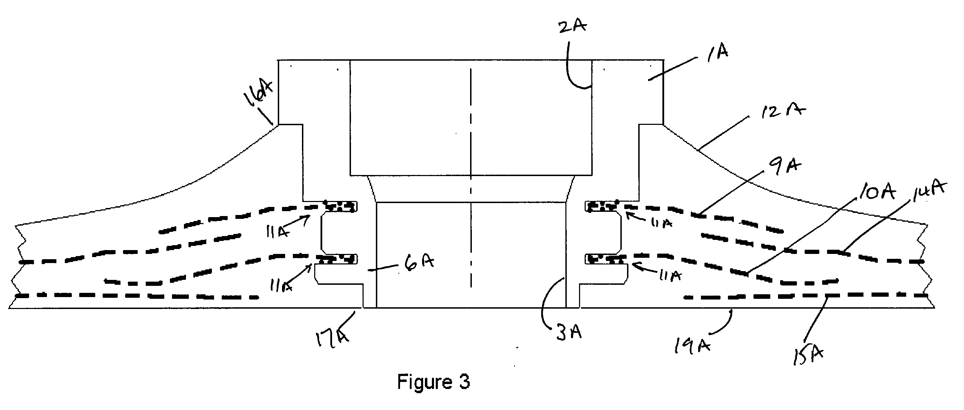

Figure 3 illustrates an insert 1A in cross-section with internal surfaces 2A and 3A. The diameters of the internal surfaces are chosen and machined as required to permit retrospective fitting of vacuum pipe connectors or resin injection valves or pressure sensors when the membrane mould is in production use. The exact design and dimensions of the insert 1A can be varied as required.

The insert 1A has a generally cylindrical nose portion 6A, having an external diameter which is as small as the diameter of surface 3A will allow. This is in order to provide the smallest possible fitting footprint once the insert 1A has been installed in the flexible membrane which is formed as described below. This allows it to be placed in the most desired and ideal positions within a flexible membrane mould surface, which could have many variations in shape and detail.

Items 9A and 10A are sheets of synthetic fabric material which are characterised by an open weave mesh type structure and are strong in tension with little to no stretch capability. It is the purpose of these sheets, which effectively form skirts, to provide anchor points for the silicone resin spray or brush material which will be used to manufacture the production membrane.

The nose portion 6A of the insert 1A is formed with a pair of spaced circumferential grooves or channels 11A and the skirts 9A and 10A are firmly attached to the insert or fitting 1A and extend radially therefrom. Various methods of attachment can be used. For example, the skirts 9A and 10A may attached by heat welding or adhesive.

Figure 3 shows the insert 1A moulded into a silicone membrane 12A with a mould face 19A. The skirts 9A and 10A are embedded within the silicone membrane 12A which also has its own web reinforcement layers 14A and 15A intermingled with the skirts 9A and 10A. The reinforcement layers 14A and 15A are typically formed of the same material as the skirts 9A and 10A and are placed in position during the spraying or brushing on of the silicone resin.

There exists no chemical bonding of the cured flexible membrane 12A to any part of the insert 1A. However, there does now exist a strong but flexible mechanical bonding between the membrane 12A and the insert 1A by way of the fabric skirts 9A and 10A. Although the membrane 12A can be pulled away from the insert 1A at the points indicated at 16A and 17A, only limited pulling away can be achieved and the flexible membrane 12A is securely attached to the insert 1A.

It will be appreciated that the insert 1A can be provided with more than two grooves 11A, with correspondingly more skirts 9A, 10A for greater insert-to-membrane attachment strength.

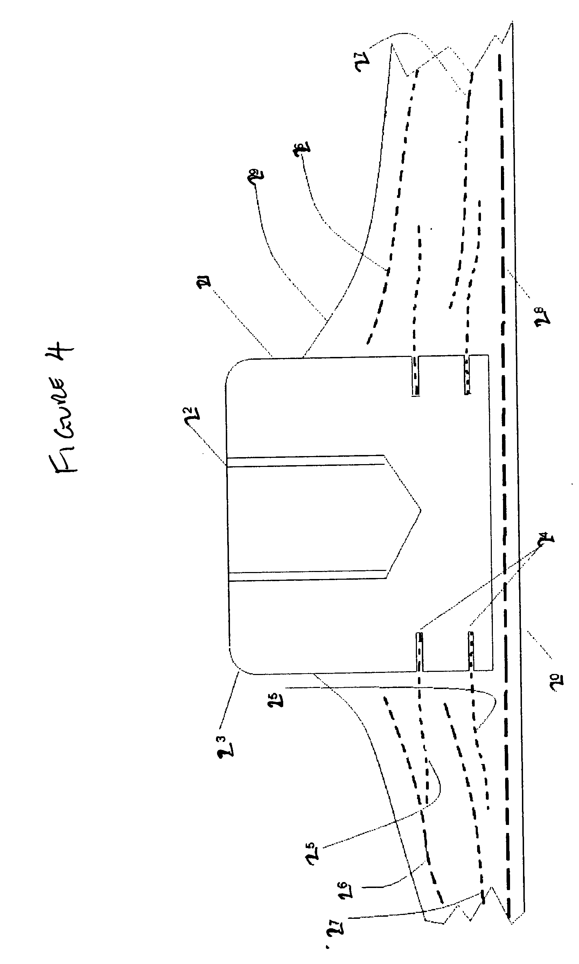

Figure 4 shows a round machined anchor fitting 21 (of suitable metal or plastic) which has a central blind threaded hole 22 into which a lifting eye (not shown) can be screwed so as to provide a fixing for a lifting rope or wire connected to an upper controlled mechanical factory lifting and lowering mechanism (not shown). The anchor fitting 21 has a smooth outer surface with a rounded upper perimeter 23 to ensure the absence of any sharp corners that might cut into a produced silicone bag during manipulation thereof.

The anchor fitting 21 is machined with two or more radial grooves 24 into which strips 25 of a reinforcing cloth are embedded radially and fixed to the anchor fitting 21 by, for example, adhesive. Sheets of reinforcing cloth may be attached to the anchor fitting in other ways, for example, by providing an external thread formation around the lower part of the fitting 21 and tightening two or more internally threaded rings (not shown) onto the external thread formation so as to grip the sheets of reinforcing cloth between adjacent rings.

During brush or spray or injection moulding manufacture of the flexible bag, additional reinforcing cloth sections 26 and 27 are interlaid within the silicone or other material used to form the flexible bag or membrane thus providing extended mechanical load radial support in tension between the anchor lift point and a substantial bag area.

The part 29 of the flexible bag around the anchor fitting 21 has a smooth moulded inner surface 20 and, if desired, the entire flexible bag may be further reinforced with embedded reinforcing cloth 28 to assist load sharing between multiple lifting points. Although only a single anchor fitting 21 is shown in the drawing, it will be appreciated that, for a large flexible bag, an appropriate number of spaced anchor fittings 21 will be provided.

With a silicone bag and with a single anchor fitting 21, tests have been carried out demonstrating the application of a 22 kg tension pull-out strain without failure. As their use has historically been recommended to support only 1 m² of large flexible bags, the anchor fittings 21 incorporated in flexible bags by the method of the present invention will provide for safe use with a 4 : 1 safety working load margin.

Thus, for a flexible mould membrane having an area of 20 m² and an overall weight of 80 kg, a minimum of twenty anchor fittings 21 will be embedded in the membrane by the method described above. The anchor fittings 21 will be arranged in an equally spaced grid pattern resulting in each anchor fitting 21 being subject to an applied load of approximately 4 kg.

Each of the anchor fittings 21 may be connected by a rope or wire to a single industrial lifting device so that, as the bag or membrane is lifted, they all play a part in sharing the entire lifting strain with a high degree of overload strain protection.

The lengths of the rope or wire between the various anchor fittings 21 and the upper lifting point may be unequal so that, the bag or membrane is lifted from the mould face in a progressive or peel-away manner and can be lowered progressively. This is important as it is better to remove and replace large bags progressively rather than attempting to do this in one instant action.

It will be appreciated that, although this aspect of the invention has been developed in relation to the production of silicone bags and membranes, other plastic materials can be used. Examples of the materials that can be used include latex and latex-type materials and polyurethanes.

## Claims

1. A method of attaching a resin film to an insert, which includes forming the insert with a generally cylindrical portion, providing one or more fabric sheets, and attaching the fabric sheets to the generally cylindrical portion of the insert and then applying a flexible plastics material in such manner as to secure the one or more fabric sheets to the insert and to form a moulded product incorporating the insert.

2. A method as claimed in Claim 1, in which the fabric sheet or sheets is or are open weave mesh-type synthetic plastic sheets.

3. A method as claimed in Claim 1, in which the generally cylindrical portion of the insert is formed with at least two circumferential grooves which receive parts of the fabric sheets.

4. A method as claimed in Claim 1, in which the generally cylindrical portion of the insert is designed to have at least two rings fitted over it, with at least one of the sheets being gripped (i.e. held in position) between two of the rings.

5. A method as claimed in Claim 4, in which one of the fabric sheets is held in position between one of the rings and a shoulder of the insert.

6. A method as claimed in any one of the preceding claims, in which the insert has a through bore.

7. A method as claimed in any one of Claims 1 to 5, in which the insert has a blind bore.

8. A resin infusion process that includes the attachment of a silicone resin film to an insert by the method claimed in any one of the preceding claims.

9. A method of producing a flexible bag that includes the method claimed in any one of Claims 1 to 7.
